# EUROPEAN PATENT APPLICATION

(11) **EP 3 181 492 A1**
(43) Date of publication of application: **21.06.2017**
(21) Application number: 15200818.1
(22) Date of filing: 17.12.2015
(51) Int. Cl.: B65G 15/32, B32B 25/04, B65G 43/02

(54) **CONVEYING INSTALLATION**

(71) Applicant: ContiTech Transportbandsysteme GmbH, 30165 Hannover (DE)
(72) Inventor: Plevak, Miroslav, 02001 Puchov (SK); Mikulica, Peter, 02001 Puchov (SK); Fedora, Jaroslav, 02001 Dolne Kockovce (SK); Martinko, Pavol, 02001 Strazenice (SK)
(74) Representative: Preusser, Andrea

(57) **Abstract**

The invention relates to a conveyor with a conveyor belt comprising a loadbearingside outer sheet and a drive-side outer sheet, and also with drums, carrier rollers, and carrier frames, where the conveyor forms a material-conveying upper web with an application site for the material to be conveyed, and a mostly material-free lower web.

The feature of the conveyor of the invention is that between the loadbearing-side outer sheet and drive-side outer sheet there is at least one further, i.e. additional, layer, which is composed of a coloured, i.e. non-black, polymer mixture.

## Description

The invention relates to a conveyor with a conveyor belt comprising a loadbearing-side outer sheet and drive-side outer sheet and, between loadbearing-side outer sheet and drive-side outer sheet at least one further, i.e. additional, layer composed of at least one polymeric material, and also with drums, carrier rollers, and carrier frames, where the conveyor forms a material-conveying upper web with an application site for the material to be conveyed, and a mostly material-free lower web. However, there are also conveyors where the lower web is also loaded.

A conveyor of this generic type is described in detail in particular in DE 36 06 129 A, EP 1 187 781 B1, DE 36 12 765 A1, EP 1 222 126 B1, DE 43 33 839 B4, WO 2005/023688 A1, EP 0 336 385 B1, WO 2008/034483 A1, EP 1 053 447 B1 and US 7 178 663 B2.
The loadbearing-side outer sheet and drive-side outer sheet of a conveyor belt as main constituent of a conveyor are mostly composed of a foil or of a woven fabric, or preferably of a rubber mixture, comprising at least one rubber component or one rubber component blend, at least one crosslinking agent or one crosslinking system, comprising a crosslinking agent and an accelerator, and also mostly other mixture ingredients, in particular at least one filler and/or at least one processing aid and/or at least one ageing inhibitor and/or at least one plasticizer and/or other added substances (e.g. fibres, colour pigments).
The vulcanization of the rubber mixture gives the conveyor belt the required resilient properties.

These resilient properties particularly of the loadbearing-side outer sheet (loadbearing side) of a conveyor belt serve inter alia for the absorption of the energy of impact of the conveyed goods on the conveyor belt (shock absorption). This shock absorption, i.e. the reduction of the energy of impact, is an essential feature for the lifetime of the conveyor belt, in particular of the loadbearing-side outer sheet.
As a result of the impact of the conveyed goods themselves, and of the friction and deflection of the conveyor belt on and at the various rollers and drums, there is increased abrasion of the conveyor belt especially on the loadbearing side. This abrasion leads in general to the belt rupturing or tearing, and hence to a failure of the conveyor as a whole.

In this scenario, customers have expressed a desire for a simple and inexpensive solution that warns the conveyor operator promptly of such abrasion, allowing the conveyor belt to be replaced and unnecessary costs avoided.

This object is achieved in that between the loadbearing-side outer sheet (loadbearing-side) and the drive-side outer sheet (drive side) of the conveyor belt there is at least one further, i.e. additional, layer, which is composed of a coloured, i.e. non-black polymer mixture.

Surprisingly, it has been found that an additional layer of this type made of a coloured polymer mixture can be integrated into the conveyor belt without significantly impairing the physical performances, and with relative simplicity indicates the abrasion and hence the need for replacement of the belt.

The expressions polymer mixture and rubber mixture are used synonymously.

The invention is in principle suitable for all conveyors and conveyor belts. Particular mention may be made here of steel cord conveyor belts and textile conveyor belts.

The loadbearing-side outer sheet and/or drive-side outer sheet can take the form of foil or woven fabric.
It is preferable that the loadbearing-side outer sheet and drive-side outer sheet are respectively composed of at least one polymeric material. It is preferable that the polymeric material is a rubber selected from the group consisting of natural rubber (NR) and/or butadiene rubber (BR) and/or chloroprene rubber (CR) and/or styrene-butadiene rubber (SBR) and/or nitride rubber (NBR) and/or butyl rubber (IIR) and/or ethylene-propylene rubber (EPM) and/or ethylene-propylene-diene rubber (EPDM) and/or polyacrylate rubber (ACM) and/or epichlorohydrin rubber (ECO) and/or chlorosulphonated polyethylene rubber (CSM) and/or silicone rubber (MVQ) and/or fluororubber (FPM).
The rubbers mentioned can be used here alone or in a blend. If the loadbearing-side outer sheet and/or drive-side outer sheet is a foil or a woven fabric, the materials mentioned can equally be used here.

The two outer sheets can moreover comprise, alongside the rubber component, at least one crosslinking agent or one crosslinking system, comprising a crosslinking agent and an accelerator, and also mostly other mixture ingredients, in particular at least one filler and/or at least one processing aid and/or at least one ageing inhibitor and/or at least one plasticizer and/or other added substances, such as fibres, for example.

The conveyor belt mostly also has an embedded tension-member system. Tension-member systems used are steel cords running parallel in the longitudinal direction of the conveyor belt. However, the tension-member system can also be a single- or multilayer textile structure, in particular in the form of a woven fabric, preferably composed of cotton and/or polyamide and/or polyester and/or aramid and/or glass and/or basalt and/or steel. The materials mentioned can be used alone or in the form of hybrid tension-member systems composed of at least one of the materials mentioned.

There can moreover also be the following components embedded into the loadbearing-side outer sheet and/or drive-side outer sheet: conductor loops, transponders, barcodes, a polymer matrix with, mixed into the material, detectable particles, or other detectable elements.
The conveyor belt can also have an additional part, for example an impeller part, a guide part, and also edge and sidewall profiles. Additional parts of this type are composed of a polymeric material (elastomer, thermoplastic elastomer, thermoplastic), the bases of these being adhesive-bonded and/or vulcanized to the loadbearing-side surface of the resilient conveyor belt.

Other components of a conveyor can be:
- deflector rollers or deflector drums
- hold-down rollers, in the case of tubular conveyor-belt systems
- correction rollers, in particular in the case of tubular conveyor-belt systems
- chutes at the application site for the material to be conveyed
- monitoring equipment.

It is essential to the invention that the conveyor belt comprises, between the two outer sheets, at least one further, i.e. additional, layer made of at least one polymeric material, this layer being composed of a coloured polymer mixture. This coloured layer is preferably arranged directly below the loadbearing-side, in order to be able to provide prompt warning of the abrasion of the loadbearing-side such that replacement of the conveyor belt is still possible, before further, deeper cracks become apparent.
The coloured polymer mixture is free from black fillers and black pigments, meaning that the amount of black fillers and black pigments is 0 phr. The colour comes about through addition of coloured, i.e. non-black, pigments or other suitable dyes.
It is important that the additional coloured layer differs in its optical colouring from that of the two outer sheets.
This coloured layer extends over the entire width of the conveyor belt and has a height or thickness of preferably between 0.9 and 1.1 mm. The layer may extend over the entire length of the conveyor belt. It is equally possible as well for the coloured layer to extend only over part of the length of the conveyor belt. For instance, the additional coloured layer, for example, may extend only over a partial length of 290 to 310 mm.
The coloured layer is preferably a calendered rubber layer.
The qualitative and/or quantitative composition of the foamed polymer mixture here, aside from carbon black as black filler or black pigments, can be the same as or different from the compositions of loadbearing-side outer layer and/or drive-side outer layer.
The rubber for the foamed polymer layer is selected from the group consisting of natural rubber (NR) and/or butadiene rubber (BR) and/or chloroprene rubber (CR) and/or styrene-butadiene rubber (SBR) and/or nitrile rubber (NBR) and/or butyl rubber (IIR) and/or ethylene-propylene rubber (EPM) and/or ethylene-propylene-diene rubber (EPDM) and/or polyacrylate rubber (ACM) and/or polyurethane (PU) and/or epichlorohydrin rubber (ECO) and/or chlorosulphonated polyethylene rubber (CSM) and/or silicone rubber (MVQ) and/or fluororubber (FPM). The rubbers mentioned can be used here alone or in a blend. The coloured polymer layer can moreover comprise the usual quantities of at least one filler. Any of the light-coloured fillers known to the person skilled in the art can be used here, for example silica, mica, silicates, aluminium hydroxide, talc, chalk, etc.

It is moreover possible to use any of the other added substances known to the person skilled in the art, such as plasticizers, antiozonants, and ageing inhibitors.
The vulcanization of the foamed layer is generally achieved by using peroxide, for example when EPDM is used as rubber component, or else in the form of sulphur vulcanization when NR, BR, or SBR is used, or else by using bisphenol when, by way of example, FPM is used.

## Claims

1. Conveyor with a conveyor belt comprising a loadbearing-side outer sheet and a drive-side outer sheet, and also with drums, carrier rollers, and carrier frames, where the conveyor forms a material-conveying upper web with an application site for the material to be conveyed, and a mostly material-free lower web, **characterized in that** between the loadbearing-side outer sheet and drive-side outer sheet there is at least one further, i.e. additional, layer, which is composed of a coloured, i.e. non-black, polymer mixture.

2. Conveyor according to Claim 1, **characterized in that** the loadbearing-side outer sheet and/or drive-side outer sheet is/are composed of at least one polymer mixture.

3. Conveyor according to Claim 1 or 2, **characterized in that** the coloured polymer mixture is free from carbon black and free from black pigments.

4. Conveyor according to any of Claims 1 to 3, **characterized in that** the coloured polymer mixture extends over the entire belt width.

5. Conveyor according to any of Claims 1 to 4, **characterized in that** the coloured polymer mixture extends over the entire belt length.

6. Conveyor according to any of Claims 1 to 4, **characterized in that** the coloured polymer mixture extends over a part of the belt length.
